# EUROPEAN PATENT APPLICATION

(11) **EP 2 624 653 A1**
(43) Date of publication of application: **07.08.2013**
(21) Application number: 12153396.2
(22) Date of filing: 31.01.2012
(51) Int. Cl.: H04W 72/12

(54) **Mobile wireless communications device with wireless local area network and cellular scheduling and related methods**

(71) Applicant: Research In Motion Limited, Waterloo, ON N2L 3W8 (CA)
(72) Inventor: Smadi, Mohammed Nawaf, Waterloo, Ontario N2L 3W8 (CA); Zhu, Lizhong, Waterloo, Ontario N2L 3W8 (CA); Jin, Xin, Waterloo, Ontario N2L 3W8 (CA); He, Fei, Waterloo, Ontario N2L 3W8 (CA); Zhou, Qingmai, Waterloo, Ontario N2L 3W8 (CA)
(74) Representative: Greenaway, Martin William

(57) **Abstract**

A mobile wireless communications may include a housing (16), a cellular transceiver (11) carried by the housing and configured to operate based upon power levels, and a wireless local area network (WLAN) transceiver (14) carried by the housing. The cellular transceiver may be configured to send timing information to the WLAN transceiver. The WLAN transceiver may be configured to schedule WLAN communications based upon the timing information and the selected power level of said cellular transceiver.

## Description

### Field of the Invention

The present invention relates to the field of communications, and, more particularly, to wireless communications and related methods.

### Background of the Invention

Cellular communication systems continue to grow in popularity and have become an integral part of both personal and business communications. Cellular telephones allow users to place and receive phone calls almost anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. The typical cellular device may have multiple transmit and receive pathways from the antenna to a digital signal processor (DSP). In particular, each signal pathway may comprise a filter to help isolate the desired frequency band from extraneous electromagnetic signals, for example, noise and interference.

Nevertheless, as frequency bands change because of regulatory reasons, expansion, etc. and as more transceivers are added to the cellular device, the likelihood of self-interference may increase. For example, the cellular transceiver may desensitize the wireless local area network (WLAN) transceiver during transmission periods, i.e. potentially rendering the WLAN transceiver inoperative.

### Brief Description of the Drawings

FIG. 1 is a schematic block diagram of an example embodiment of a mobile wireless communications device.

FIG. 2 is a flowchart illustrating an example embodiment of the operation of the device of FIG. 1.

FIG. 3 is a schematic block diagram illustrating example components for the mobile wireless communications device of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may comprise a housing, a cellular transceiver carried by the housing and configured to operate based upon a plurality of power levels, and a WLAN transceiver carried by the housing. The cellular transceiver may be configured to send timing information, and the WLAN transceiver may be configured to schedule WLAN communications based upon the timing information and the selected power level of said cellular transceiver.

In some embodiments, the timing information may comprise a transmission time duration value and a transmission start time for the cellular transceiver. The cellular transceiver may be configured to generate the transmission start time for the cellular transceiver. The cellular transceiver may be configured to generate a logic signal for indicating the transmission start time for the cellular transceiver.

In some embodiments, the mobile wireless communications device may further comprise a clock signal generator configured to generate a common clock signal. The cellular transceiver and the WLAN transceiver may be configured to schedule communications based upon the common clock signal.

Additionally, the mobile wireless communications device may further comprise a plurality of cellular antennas. The cellular transceiver may include a controller configured to select at least one cellular antenna for cellular communications. The WLAN transceiver may be configured to schedule the WLAN communications based upon the selected at least one cellular antenna.

Each cellular antenna may have a respective cellular to WLAN antenna isolation value, and the WLAN transceiver may be configured to schedule the WLAN communications based upon the respective cellular to WLAN antenna isolation value of the selected at least one cellular antenna. The WLAN transceiver may be configured to broadcast a serial clear to send to self
(CTS2SELF) message, and to selectively change a broadcast power and transmission rate for the CTS2SELF message. The WLAN transceiver may be configured to selectively change the broadcast power and the transmission rate for the CTS2SELF message based upon a WLAN base station range value. For example, the WLAN transceiver may comprise an IEEE 802.11 transceiver, and the cellular transceiver may comprise at least one of a long term evolution (LTE) transceiver and a WiMAX IEEE 802.16 transceiver.

Another aspect is directed to a mobile wireless communications device that may comprise a housing, a cellular transceiver carried by the housing, and a WLAN transceiver carried by the housing. At least one of the WLAN transceiver and the cellular transceiver may be configured to determine a cellular self-interference level and schedule WLAN communications based upon the cellular self-interference level.

Another aspect is directed to a method of operating a mobile wireless communications device comprising a cellular transceiver, and a WLAN transceiver. The method may comprise sending timing information to the WLAN transceiver from the cellular transceiver, and scheduling WLAN communications of the WLAN transceiver based upon the timing information for the cellular transceiver and a selected power level of the cellular transceiver.

Another aspect is directed to a method of operating a mobile wireless communications device comprising a cellular transceiver, and a WLAN transceiver. The method may include determining a cellular self-interference level via at least one of the WLAN and cellular transceivers, and scheduling WLAN communications based upon the cellular self-interference level.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

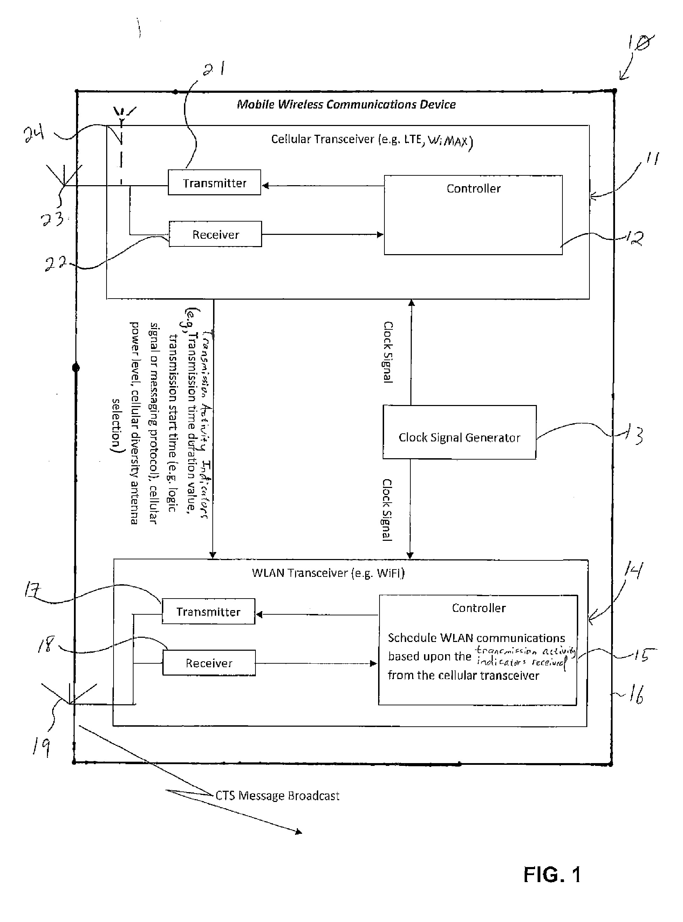

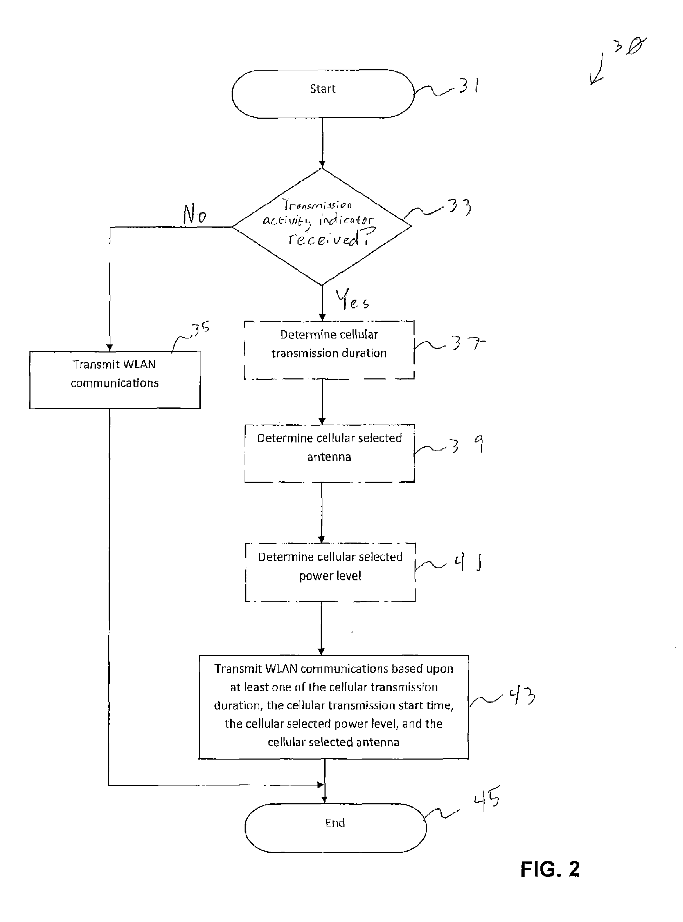

Referring now to FIG. 1, a mobile wireless communications device **10** according to the present disclosure is now described. Moreover, with reference additionally to FIG. 2, a flowchart **30** illustrates a method of operating the mobile wireless communications device **10** (Block **31).** The mobile wireless communications device **10** illustratively includes a housing 16, a cellular transceiver **11** carried by the housing, and a WLAN transceiver **14** carried by the housing. The cellular transceiver **11** illustratively includes a controller **12,** a receiver **22** coupled to the controller, a transmitter 21 coupled to the controller, and an antenna **23** coupled to the receiver and transmitter. Although not shown, the cellular transceiver **11** may also include an antenna coupler between the transmitter/receiver **21-22** and the antenna **23.** Depending on the radio transmission technology, the coupler may comprise, for example, a duplexer or a switchplexer. In the illustrated embodiment, the mobile wireless communications device **10** includes a second cellular diversity antenna **24.** The cellular transceiver **11** may comprise one or more of an LTE transceiver a WiMAX IEEE 802.16 transceiver, a Global System for Mobile Communications (GSM) transceiver, and a code division multiple access (CDMA) transceiver.

The WLAN transceiver **14** illustratively includes a controller **15,** a receiver **18** coupled to the controller, a transmitter **17** coupled to the controller, and an antenna **19** coupled to the receiver and transmitter. For example, the WLAN transceiver **14** may comprise one or more of an IEEE 802.11 transceiver (operating at 2.4 GHz), and a Bluetooth transceiver. The mobile wireless communications device **10** illustratively includes a clock signal generator **13** configured to generate a common clock signal for the cellular transceiver **11** and the WLAN transceiver **14.** In particular, the common clock signal provides a common time reference for the operations of the transceivers **11, 14.**

During operation, the mobile wireless communications device **10** generates data for exchange with another device (e.g. base station) via either the cellular transceiver **11** or the WLAN transceiver **14.** If the mobile wireless communications device 10 has only WLAN communications to send out and no cellular communications, the WLAN transceiver **14** proceeds to perform those communications (Blocks **33, 35)** without regard to the silent/absent cellular radio. On the other hand, if the mobile wireless communications device **10** also has some cellular communications to perform, the device performs selective scheduling of the WLAN communications because of potential desensitization of the WLAN receiver **18** during cellular transmit periods. This desensitization may be the result of the WLAN transceiver **14** and cellular transceiver **11** operating on adjacent frequency bands. Of course, the teachings herein may be applied to non-adjacent frequency bands that cause interference. In some embodiments, the mobile wireless communications device **10** may selectively schedule cellular communications to avoid desensitization.

When the mobile wireless communications device **10** commences a cellular transmission, the cellular transceiver **11** is configured to send one or more transmission activity indicators, such as timing information related to the cellular transmission activity, to the WLAN transceiver **14** (Block **33**). The transmission activity indicators comprise, for example, a transmission time duration value and a transmission start time for the cellular transceiver. The mobile wireless communications device **10** may include a digital interface between the cellular transceiver **11** and the WLAN transceiver **14.** For example, the digital interface may comprise a data communications bus or a single wire connection.

In some embodiments, the cellular transceiver **11** may generate a digital message including transmission activity indicators, such as the transmission time duration value and the transmission start time for the cellular transceiver (Block **37).** In other embodiments, the cellular transceiver **11** may be configured to generate a logic signal for indicating the transmission start time for the cellular transceiver. In other words, the cellular transceiver **11** would include an output pin for indicating when the cellular transmission is occurring. In some embodiments, the transmission start time for the cellular transceiver is provided near instantaneously. In some embodiments, the cellular transceiver **11** also provides an indication of near instantaneous cellular transmission. For example, this signal may comprise a hardware logic signal being activated during all cellular transmission periods and deactivated otherwise, and the logical signal may further be based on at least one of the cellular transmission power, antenna, cellular to WLAN antenna isolation, frequency/band.

The WLAN transceiver **14** is configured to schedule WLAN communications based upon the transmission time duration value and the transmission start time for the cellular transceiver **11.** For example, the WLAN transceiver **14** may stagger WLAN communications to avoid the desensitizing effect. In other embodiments, the WLAN transceiver **14** may cooperate with the cellular transceiver **11** to pause or delay cellular transmissions to permit receipt of WLAN signals. In embodiments including the clock signal generator **13,** including the illustrated embodiment, the cellular transceiver 11 and the WLAN transceiver **14** may be configured to schedule communications based upon the common clock signal.

In other words, the WLAN transceiver **14** is configured to determine a cellular self-interference level and schedule WLAN communications based upon the cellular self-interference level. The determination of the cellular self-interference is based upon at least one of the transmission time duration value, the transmission start time for said cellular transceiver, the selected power level of the cellular transceiver, the cellular-to-WLAN isolation value for the selected antenna, and an interference power value detected at the WLAN transceiver **14.**

In some embodiments, the cellular transceiver **11** may be configured to operate based upon a plurality of power levels. For example, the plurality of power levels may comprise at least one of a cellular transmit power level, and a WLAN antenna received power coupled from the cellular transmitter. For example, the cellular base station may provide control information for the cellular transmit power level. In these embodiments, the WLAN transceiver **14** may be configured to schedule the WLAN communications based upon the selected power level of the cellular transceiver **11** (Block **41).** For example, if the cellular transmit power level is low enough, the WLAN receiver **18** may not be substantially desensitized.

In the illustrated embodiment, Blocks **37, 39,** & 41 are shown with dashed lines to indicate that one or more of these steps is optional. In particular, the controller 15 of the WLAN transceiver **14** may schedule communications based upon one or more of the transmission activity indicators.

In some embodiments, the cellular transmit power level is provided in the digital message, but in other embodiments, the cellular transmit power level may be detected by a power sensor/WLAN interference sensor. In yet other embodiments, the cellular transceiver **11** may communicate the selected cellular transmit power level via a corresponding plurality of signals, such as hardware logic signals.

In embodiments of the mobile wireless communications device **10** that have cellular antenna diversity, such as the illustrated example embodiment. More specifically, the mobile wireless communications device 10 illustratively includes a plurality of cellular antennas 23-24 (second antenna shown with dashed lines) coupled to the cellular transmitter and receiver **21-22.** In these embodiments, depending on the received signal characteristics, the controller 12 is configured to select at least one cellular antenna **23-24** for cellular transmission. The WLAN transceiver **14** may be configured to schedule the WLAN communications based upon the selected at least one cellular antenna (Block **39).** In some embodiments, the selected at least one cellular antenna is also provided in the digital message or an indicator.

In particular, one of the cellular antennas may have greater respective isolation values than other with the WLAN antenna, the WLAN transceiver **14** may be configured to schedule the WLAN communications based upon a respective cellular to WLAN antenna isolation value of the selected at least one cellular antenna with the WLAN antenna. For example, if the respective cellular to WLAN antenna isolation value is great enough to avoid substantial interference with WLAN receiver **18** operations, the WLAN communications may not need to be selectively scheduled at all. Once the WLAN transceiver **14** has the cellular transceiver **11** operation indicators noted above, the WLAN transceiver can then commence WLAN communication activities effectively by, for example, scheduling the reception of WLAN communications during periods no cellular transmission (Blocks **43, 45)** or only cellular reception. In other embodiments, the WLAN transceiver **14** can coordinate with the cellular transceiver 11 and schedule WLAN and cellular communications periodically in time slots and/or block cellular transmit operations temporarily.

In some embodiments, the controller **15** of the WLAN transceiver **14** may schedule WLAN communications being received at the mobile wireless communications device **10,** i.e. scheduling transmission at the companion device. The WLAN transceiver **14** is configured to broadcast a CTS2SELF message, and to selectively change a broadcast power and transmission rate for the CTS2SELF message. As will be appreciated by those skilled in the art, the CTS2SELF message causes the companion devices, and any WLAN device within range to cease WLAN transmissions. The WLAN transceiver **14** may be configured to selectively change the broadcast power and the transmission rate for the CTS2SELF message based upon a WLAN base station range value.

Another aspect is directed to a method of operating a mobile wireless communications device **10** comprising a cellular transceiver **11,** and a WLAN transceiver **14.** The method may comprise sending a transmission time duration value to the WLAN transceiver **14** from the cellular transceiver **11,** and scheduling WLAN communications of the WLAN transceiver based upon the transmission time duration value and a transmission start time for the cellular transceiver.

In the illustrated embodiment, the controllers **12, 15** of the cellular and WLAN transceivers **11, 14** cooperate to schedule of WLAN communications. Nevertheless, in other embodiments, it should be understood that the mobile wireless communications device **10** may include a processor unit coupled to the cellular and WLAN transceivers **11, 14** and configured to perform the operations of the controllers **12, 15.** The processor unit may be separate from the cellular and WLAN transceivers **11, 14,** in some embodiments, on a separate integrated circuit chipset. For example, the processor would determine the timing information, such as the transmission time value and transmission start time, of the cellular transmission activity and would schedule WLAN communications based upon the timing information. Also, these values would be delivered not from the cellular transceiver **11** to the WLAN transceiver **14,** but rather directly from the cellular transceiver **11** to the processor.

For illustrative purposes, the following discussion of an exemplary embodiment of the mobile wireless communications device 10 is provided.

### Contextual Discussion

Devices with co-located radios operating concurrently in adjacent or nearby / harmonic bands may suffer from coexistence issues. An example of this is coexistence of the LTE B40 (2.3-2.4GHz) or WiMAX (2.5-2.7GHz) with WLAN operating in the 2.4GHz ISM band. More specifically, no concurrent transmit (TX)/receive (RX) operation may occur due to the de-sensing and receiver saturation caused in one band by a transmission in the other band. With typical antenna isolation (e.g. 15 to 25 dB) and while operating at the maximum transmission power (e.g. 23dBm for both radios), it may be difficult for the filtering option to solve this issue in the frequency domain with acceptable size components for handset applications.

In IEEE 802.11 compliant WLANs, a CTS2Self frame may be used to silence all WLAN stations that receive the CTS2Self on the medium for a specified duration to prevent WLAN reception during co-located cellular TX operation. This frame type was defined to allow coexistence between orthogonal frequency-division multiplexing (OFDM) and legacy physical layers in IEEE 802.11 WLANs and has an impact on throughput performance of all stations receiving it on the WLAN operating frequency. To mitigate the impact of blocking all stations on the medium, a WiFi Direct (P2P) standard (Wi-Fi Direct - P2P Communication standard draft) defines a Notice of Absence (NoA) frame type that is used exclusively by a group owner (i.e. a WLAN access point in a mobile hotspot scenario) to advertise/schedule periods of unavailability only to its associated clients. One application of the NoA frame is to prevent overlapping WLAN RX and cellular TX operations. However, albeit not to the same extent as a CTS2Self frame, a NoA frame may cause the mobile hotspot to suffer a performance hit. Using these frame types may be undesirable and should be used as sparingly as possible.

Approach One: It has been observed that cellular technology has been designed with aggressive RF power control techniques, whereby the maximum TX output power is rarely used. In some applications, the two interfering radios are co-located on the same device, an interface between the two radios to communicate one of 1 through 3 as well as 4:
1- The configured TX duration and the beginning of a cellular TX operation: both band 40 LTE and WiMAX are TDD based and the location of the uplink (UL) and downlink (DL) sub-frames are known a priori. In one embodiment, the configured duration information is exchanged through message exchanges, and the beginning of the cellular TX operation is indicated by a hardware signal.
2- An instantaneous indicator of the cellular TX: The indication may be provided by a hardware signal line (although alternatives are possible), and the signal is activated during the period of cellular TX operation. The WLAN determines the TX duration by using the previously detected activation time of the indicator.
3- The schedule information of the cellular TX, for the WLAN and cellular radios implemented with a common clock or time reference.

A potential advantage of the option 2 over 1 and 3 is that no software message is required between the two radios. The potential disadvantage is the duration may be determined wrongly at the very first TX operation, and at the first TX slot whenever the configuration of TX duration changes. The potential advantage of options 1 and 2 over 3 is that the two radios (WLAN and cellular) do not require a common time reference.
4- The expected cellular TX power level in the upcoming cellular UL sub-frame: one embodiment uses message exchanges through software, and an alternate embodiment uses one or a plurality of indicator signals for indicating the power ranges of current the cellular TX activities. Yet another embodiment uses a power sensor to detect the TX power of the cellular radio, or detect the interference level to the WLAN from the cellular radio.

If the TX power is in a range that WLAN-to-cellular antenna isolation and the attenuation offered by coexistence filters are sufficient to overcome the interference introduced by the cellular TX at the WLAN receiver given the WLAN RSSI, then no WLAN blocking mechanism is employed. Otherwise, if a WLAN Rx is expected (e.g. in response to a PS-POLL or a QoS Null frames, or a periodic beacon reception) during the upcoming cellular UL transmission, then a WLAN blocking mechanism is employed to prevent overlapping the WLAN RX (i.e. the other party's WLAN TX) and cellular TX operation. In devices with cellular transmit antenna selective diversity, there may be multiple characterized cellular-to-WLAN antenna isolation values. For example, in devices with two cellular antennas, there are two cellular-to-WLAN antenna isolation values. In one embodiment, the smallest antenna isolation is used in determining whether a WLAN blocking mechanism shall be used. This conservative approach shall be used if the choice of the cellular antenna is unknown or possibly changing during the expected overlapping WLAN RX operation.

In another embodiment, the instantaneous choice of the cellular antenna - if available - shall be used to reflect the most accurate antenna isolation value allowing for reduced application of WLAN blocking mechanisms in scenarios where large cellular-to-WLAN antenna isolation is available. In one embodiment, the cellular radio not only indicates to the WLAN the TX power used, it also indicates the antenna used, so that WLAN blocking decision is based on both. In another embodiment, instead of indicating the TX power of cellular radio to the WLAN, the interference level (referenced at the WLAN antenna) from the cellular radio is indicated to the WLAN so that the blocking decision is based on the received interference levels. Such an indication can be implemented, for example, by a power sensor, and can also be implemented by accounting for the characterized antenna isolation values, the TX power level and the antenna used to TX.

Approach Two: (Applicable to WLAN client stations utilizing CTS2Self) In situations where Approach 1 above uses a CTS2Self frame, the method further includes another refinement by reducing WLAN TX power level used to transmit the CTS2Self frame and/or choosing the appropriate data rate used for the CTS2self frame, so as to prevent unnecessary blocking of other WLAN stations listening on the medium but not of interest to the sending WLAN station of CTS2self in question.

To determine the TX power of CTS2Self, the client device can determine the path loss through a beacon signal and the received signal strength indicator (RSSI) of the beacon signal observed by the client, and calculate the needed TX power and/or data rate so as to be just enough to reach the access point that client is trying to communicate with. To limit the range of the CTS2Self frame, it should be transmitted at the minimum power level that will be just enough to guarantee correct reception by the WLAN access point (i.e. without amble link budget, this power level denoted as Pmin (dBm)). To accomplish this, the co-located WLAN radio may use the transmitted power level of the WLAN beacon and beacon RSSI value to determine the path loss, PL (dB), to the WLAN access point. Then based on the data rate used to transmit the CTS2Self, determine the required RSSI, X (dBm), at the WLAN access point to correctly decode the frame. For example, if 1Mbps is used, then an RSSI value of -93dBm is acceptable. Pmin should be set to -93 + PL.

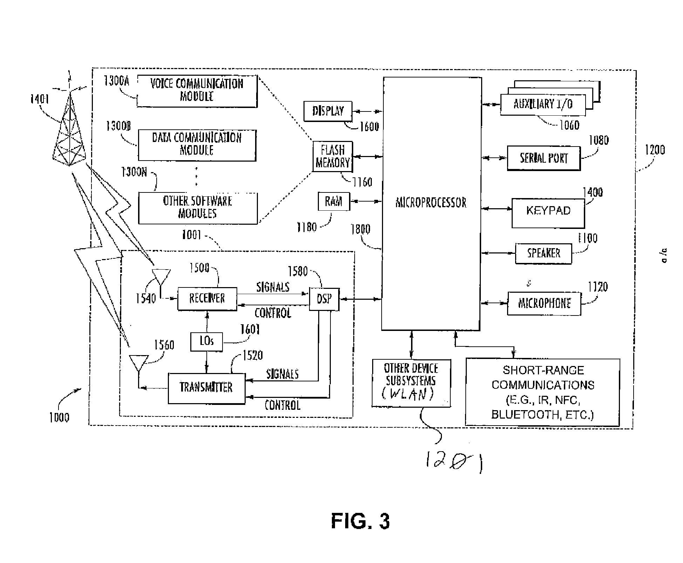

Example components of a mobile wireless communications device **1000** that may be used in accordance with the above-described embodiments are further described below with reference to FIG. 3. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 3. These include a communications subsystem **1001;** a short-range communications subsystem 1020; the keypad **1400** and the display **1600,** along with other input/output devices **1060, 1080, 1100** and **1120;** as well as memory devices **1160, 1180** and various other device subsystems **1201,** such as a WLAN system. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network 1401 with corresponding data items stored or associated with a host computer system.

Communication functions, including data and voice communications, are performed through the communications subsystem 1001, and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), CDMA, Wideband code division multiple access (W-CDMA), personal communications service (PCS), GSM, enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver 1500, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem 1001 and is input to the processing device **1800.** The received signal is then further processed by the processing device **1800** for an output to the display 1600, or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display 1600 may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (10) comprising:
a housing (16);
a cellular transceiver (11) carried by said housing and configured to operate based upon a plurality of power levels; and
a wireless local area network (WLAN) transceiver (14) carried by said housing;
said cellular transceiver configured to send timing information said WLAN transceiver;
said WLAN transceiver configured to schedule WLAN communications based upon the timing information and the selected power level of said cellular transceiver.

2. The mobile wireless communications device of Claim 1 wherein the timing information comprises a transmission time duration value and a transmission start time for said cellular transceiver.

3. The mobile wireless communications device of Claim 1 further comprising a plurality of cellular antennas (23-24); and wherein said cellular transceiver comprises a controller (12) configured to select at least one cellular antenna for cellular transmissions.

4. The mobile wireless communications device of Claim 2 wherein said WLAN transceiver is configured to schedule the WLAN communications based upon the selected at least one cellular antenna.

5. The mobile wireless communications device of Claim 2 wherein each cellular antenna has a respective cellular to WLAN antenna isolation value; and wherein said WLAN transceiver is configured to schedule the WLAN communications based upon the respective cellular to WLAN antenna isolation value of the selected at least one cellular antenna.

6. The mobile wireless communications device of Claim 2 wherein said cellular transceiver is configured to generate the transmission start time for said cellular transceiver.

7. The mobile wireless communications device of Claim 2 wherein said cellular transceiver is configured to generate a logic signal for indicating the transmission start time for said cellular transceiver.

8. The mobile wireless communications device of Claim 1 further comprising a clock signal generator (13) configured to generate a common clock signal; and wherein said cellular transceiver and said WLAN transceiver are configured to schedule communications based upon the common clock signal.

9. The mobile wireless communications device of Claim 1 wherein said WLAN transceiver is configured to broadcast a serial clear to send to self (CTS2SELF) message, and to selectively change a broadcast power and transmission rate for the CTS2SELF message.

10. The mobile wireless communications device of Claim 1 wherein said WLAN transceiver comprises an IEEE 802.11 transceiver; and wherein said cellular transceiver comprises at least one of a long term evolution (LTE) transceiver and a WiMAX IEEE 802.16 transceiver.

11. A method of operating a mobile wireless communications device (10) comprising a cellular transceiver (11), and a wireless local area network (WLAN) transceiver (14), the method comprising:
sending timing information to the WLAN transceiver from the cellular transceiver;
scheduling WLAN communications of the WLAN transceiver based upon the timing information and a selected power level of the cellular transceiver.

12. The method of Claim 11 wherein the timing information comprises a transmission time duration value and a transmission start time for said cellular transceiver.

13. The method of Claim 11 further comprising selecting at least one cellular antenna for transmitting signals for cellular transmissions.

14. The method of Claim 13 further comprising scheduling the WLAN communications based upon the selected at least one cellular antenna.

15. The method of Claim 13 wherein each cellular antenna has a respective cellular antenna to WLAN antenna isolation value; and further comprising scheduling the WLAN communications based upon the respective cellular antenna to WLAN antenna isolation value of the selected at least one cellular antenna.

## Amended claims

### Amended claims in accordance with Rule 137(2) EPC.

**1.** A mobile wireless communications device (10) comprising:
a housing (16);
a cellular transceiver (11) carried by said housing and configured to operate based upon a plurality of power levels; and
a wireless local area network, WLAN, transceiver (14) carried by said housing;
said cellular transceiver configured to send timing information to said WLAN transceiver;
said WLAN transceiver configured to schedule WLAN communications based upon the timing information and a selected power level of said cellular transceiver.

**2.** The mobile wireless communications device of Claim 1 wherein the timing information comprises a transmission time duration value and a transmission start time for said cellular transceiver.

**3.** The mobile wireless communications device of Claim 1 further comprising a plurality of cellular antennas (23-24); and wherein said cellular transceiver comprises a controller (12) configured to select at least one cellular antenna for cellular transmissions.

**4.** The mobile wireless communications device of Claim 2 wherein said WLAN transceiver is configured to schedule the WLAN communications based upon the selected at least one cellular antenna.

**5.** The mobile wireless communications device of Claim 2 wherein each cellular antenna has a respective cellular to WLAN antenna isolation value; and wherein said WLAN transceiver is configured to schedule the WLAN communications based upon the respective cellular to WLAN antenna isolation value of the selected at least one cellular antenna.

**6.** The mobile wireless communications device of Claim 2 wherein said cellular transceiver is configured to generate the transmission start time for said cellular transceiver.

**7.** The mobile wireless communications device of Claim 2 wherein said cellular transceiver is configured to generate a logic signal for indicating the transmission start time for said cellular transceiver.

**8.** The mobile wireless communications device of Claim 1 further comprising a clock signal generator (13) configured to generate a common clock signal; and wherein said cellular transceiver and said WLAN transceiver are configured to schedule communications based upon the common clock signal.

**9.** The mobile wireless communications device of Claim 1 wherein said WLAN transceiver is configured to broadcast a serial clear to send to self, CTS2SELF, message, and to selectively change a broadcast power and transmission rate for the CTS2SELF message.

**10.** The mobile wireless communications device of Claim 1 wherein said WLAN transceiver comprises an IEEE 802.11 transceiver; and wherein said cellular transceiver comprises at least one of a long term evolution, LTE, transceiver and a WiMAX IEEE 802.16 transceiver.

**11.** A method of operating a mobile wireless communications device (10) comprising a cellular transceiver (11), and a wireless local area network, WLAN, transceiver (14), the method comprising:
sending timing information to the WLAN transceiver from the cellular transceiver;
scheduling WLAN communications of the WLAN transceiver based upon the timing information and a selected power level of the cellular transceiver.

**12.** The method of Claim 11 wherein the timing information comprises a transmission time duration value and a transmission start time for said cellular transceiver.

**13.** The method of Claim 11 further comprising selecting at least one cellular antenna for transmitting signals for cellular transmissions.

**14.** The method of Claim 13 further comprising scheduling the WLAN communications based upon the selected at least one cellular antenna.

**15.** The method of Claim 13 wherein each cellular antenna has a respective cellular antenna to WLAN antenna isolation value; and further comprising scheduling the WLAN communications based upon the respective cellular antenna to WLAN antenna isolation value of the selected at least one cellular antenna.
